# FASCICULE DE BREVET EUROPEEN

(11) **EP 1 679 242 B1**
(45) Date de publication et mention de la délivrance du brevet: **30.04.2008**
(21) Numéro de dépôt: 05292802.5
(22) Date de dépôt: 27.12.2005
(51) Int. Cl.: B60T 8/32, B64C 25/42, B64C 25/44, F16D 65/14

(54) **Procédé de protection dans un système de freinage de véhicule à freins électriques**
Verfahren zum Schutz eines Bremssystems eines Fahrzeuges mit elektrischen Bremsen
Protection procedure in a braking system of a vehicle with electric brakes

(30) Priorité: 11.01.2005 FR 0500260
(43) Date de publication de la demande: 12.07.2006
(73) Titulaire: MESSIER-BUGATTI, 78140 Velizy Villacoublay (FR)
(72) Inventeur: Chico, Philippe, 92100 Boulogne Billancourt (FR); Girod, Pierre, 75017 Paris (FR)
(74) Mandataire: Parzy, Benjamin Alain

(56) Documents cités:
- US-A- 4 568 863
- US-B1- 6 460 661
- US-B1- 6 471 017

## Description

L'invention concerne un procédé de protection dans un système de freinage de véhicule à freins électriques.

### ARRIERE-PLAN DE L'INVENTION

On connaît des systèmes de freinage pour aéronef comportant des freins pourvus d'actionneurs électromécaniques qui comportent chacun un poussoir actionné par un moteur électrique pour appliquer sélectivement un effort sur des éléments de friction du frein.

Un tel système de freinage peut être placé dans un mode commandé dans lequel les poussoirs des actionneurs sont actionnés par les moteurs électriques associés pour appliquer sur les éléments de friction un effort de freinage en réponse à une consigne de freinage, la consigne de freinage étant déterminée en fonction de signaux provenant des pédales actionnées par le pilote, ou encore en fonction d'une décélération programmée.

Un tel système est connu du document US 4, 568, 863 A1.

Le système de freinage peut également être placé dans un mode de parc dans lequel les poussoirs des actionneurs sont bloqués dans une position où ils exercent un effort de parc sur les éléments de friction. L'effort de parc est ainsi maintenu en l'absence d'action des moteurs électriques, ce qui permet de maintenir l'aéronef immobile notamment lorsqu'il est arrêté et hors tension.

En fonctionnement normal, le système de freinage est dans le mode de fonctionnement commandé. Le pilote fait passer le système de freinage en mode de parc lorsqu'il veut immobiliser l'aéronef au parking avant d'arrêter les groupes motopropulseurs de l'aéronef.

Or il existe d'autres situations dans lesquelles l'aéronef est arrêté et immobilisé, par exemple en cas d'attente en seuil de piste (parfois plusieurs minutes) ou encore en cas de point fixe lors duquel le pilote pousse les groupes motopropulseurs de l'aéronef tout en maintenant les pieds sur les pédales de frein pour éviter que l'aéronef ne bouge.

Lors de ces phases d'arrêt, le pilote appuie continuellement sur les pédales de sorte que les freins sont commandés pour exercer un effort permanent. Les moteurs électriques des actionneurs risquent de chauffer dangereusement. Il importe que la température des moteurs électriques ne dépasse pas une température de transition de la résine qui imprègne les bobinages des moteurs électriques.

Il est à noter que ce problème ne se pose pas pour des freins hydrauliques classiques, puisqu'aucun échauffement n'est à craindre du fait d'un appui prolongé sur les pédales alors que l'aéronef est immobilisé.

### OBJET DE L'INVENTION

L'invention a pour objet un procédé de protection des moteurs électriques équipant les freins électriques qui diminue le risque d'échauffement des moteurs électriques.

### BREVE DESCRIPTION DE L'INVENTION

Selon l'invention, on propose un procédé de protection dans un système de freinage de véhicule comportant au moins un frein pourvu d'au moins un actionneur électromécanique qui comporte un poussoir actionné par un moteur électrique pour appliquer sélectivement un effort sur des éléments de friction du frein, le système de freinage pouvant fonctionner à la demande du pilote du véhicule soit dans un mode commandé dans lequel le poussoir de l'actionneur est actionné par le moteur électrique pour appliquer sélectivement sur les éléments de friction un effort de freinage en réponse à une consigne de freinage, soit dans un mode de parc dans lequel le poussoir de l'actionneur est bloqué dans une position où il exerce un effort de parc sur les éléments de friction en l'absence d'action du moteur, le procédé comportant l'étape de, alors que le véhicule est à l'arrêt, que le système de freinage est en mode commandé et que le poussoir est commandé pour appliquer un effort sur les éléments de friction, passer automatiquement sans intervention du pilote du mode commandé au mode de parc.

Ainsi, lorsque le système de freinage détecte une situation dans laquelle le véhicule est arrêté et que le pilote maintient un effort sur les freins, le système passe selon l'invention en mode de parc, ce qui permet de maintenir un effort de parc apte à immobiliser le véhicule, tout en soulageant les moteurs électriques, ce qui évite aux moteurs électriques de chauffer inutilement. De plus, la consommation électrique des freins est ainsi diminuée.

Le fait de passer automatiquement du mode commandé au mode de parc, de préférence à un passage ordonné par le pilote, permet de pallier les risques d'un oubli éventuel du pilote, ou d'un retard ayant laissé le temps aux moteurs de chauffer dangereusement.

De préférence, le passage du mode commandé au mode de parc n'intervient qu'après un délai prédéterminé. Avantageusement, le passage du mode commandé au mode de parc intervient également en réponse à un signal de surchauffe indicatif d'un dépassement d'un seuil de température dans le moteur électrique de l'actionneur.

Selon un aspect particulier de l'invention, le passage du mode commandé au mode de parc n'est possible que si la consigne de freinage dépasse un premier seuil d'effort prédéterminé.

De préférence alors, le passage inverse du mode de parc en mode commandé intervient si la consigne de freinage descend sous un deuxième seuil d'effort prédéterminé inférieur au premier seuil d'effort.

Selon un autre aspect particulier de l'invention, le passage inverse du mode de parc en mode commandé intervient en réponse à un signal indiquant que l'aéronef n'est plus à l'arrêt.

### BREVE DESCRIPTION DES DESSINS

L'invention sera mieux comprise à la lumière de la description qui suit en référence aux figures des dessins annexés parmi lesquelles :
- la figure 1 est une vue schématique d'un aéronef comportant plusieurs roues freinées ;
- la figure 2 est une vue en coupe d'une des roues de l'aéronef de la figure 1 équipée d'un frein à actionneurs électriques ;
- la figure 3 est un diagramme schématique de la logique de passage du mode commandé au mode de parc ;
- la figure 4 est un diagramme schématique de la génération d'un signal de surchauffe permettant le passage accéléré en mode de parc.

### DESCRIPTION DETAILLEE DE L'INVENTION

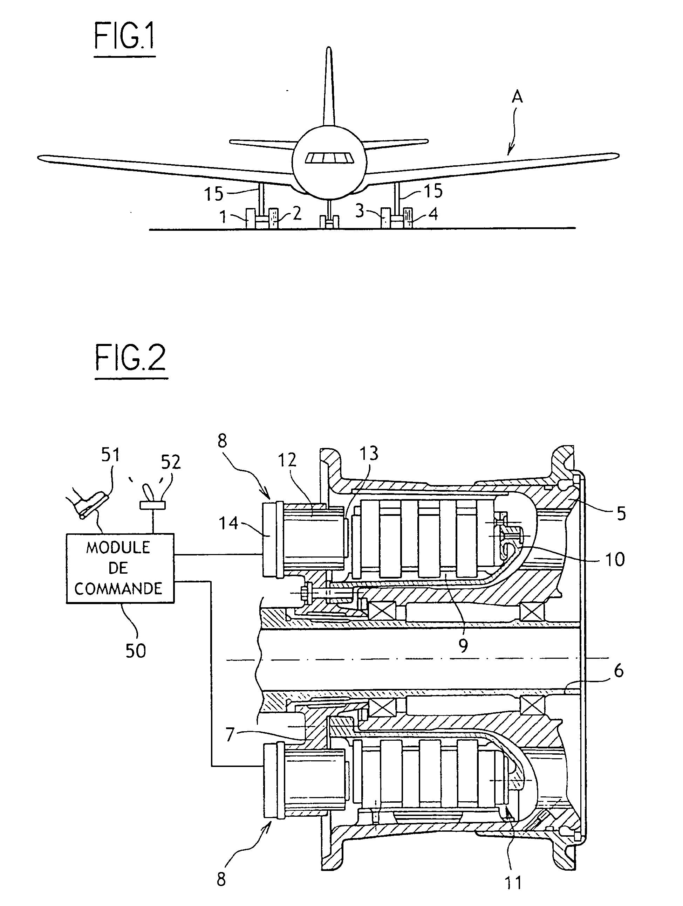

Le procédé de l'invention est détaillé ici en application à un aéronef A tel que celui illustré à la figure 1 qui comporte quatre roues freinées numérotées de 1 à 4 portées par des atterrisseurs 15.

Tel qu'illustré à la figure 2, chacune des roues freinées comporte une jante 5 adaptée à recevoir un pneumatique (non représenté ici) et montée à rotation sur un essieu 6 porté par l'un des atterrisseurs 15 de l'aéronef. Sur l'essieu 6 est montée une couronne 7 portant des actionneurs électromécaniques 8. Sur la couronne 7 est fixé un tube de torsion 9 qui s'étend dans la jante 5 pour se terminer par un appui 10. La couronne 7, et donc le tube de torsion 9, sont arrêtés en rotation vis à vis de l'essieu 6 par des moyens d'arrêt non représentés ici.

Entre l'appui 10 et les actionneurs 8 s'étend une pile de disques 11 composée de rotors qui sont solidaires en rotation de la jante 5 et de stators qui sont solidaires en rotation du tube de torsion 9.

Chacun des actionneurs 8 comporte un corps 12 dans lequel un poussoir 13 est monté pour se déplacer linéairement en regard de la pile de disques 11 sous l'action d'un moteur électrique contenu dans le corps 12, afin d'appliquer sur la pile de disques 11 un effort commandé de pression qui, en induisant des efforts de friction entre les rotors et les stators de la pile de disques, contribue à ralentir la rotation de la jante 5, et donc à freiner l'aéronef.

Chacun des actionneurs 8 comporte un organe de blocage 14 adapté à bloquer le poussoir 13 dans la position dans laquelle il se trouve lors de l'activation de l'organe de blocage 14.

Les actionneurs sont associés à un module de commande 50 qui possède ici deux modes de fonctionnement : d'une part un mode commandé dans lequel les poussoirs 13 sont déplacés vis à vis de la pile de disques 11 par le moteur électrique en réponse à une consigne d'effort de freinage qui est générée notamment à partir de signaux provenant de pédales de frein 51 actionnées par le pilote, et d'autre part un mode de parc dans lequel le poussoir 13 est commandé pour exercer sur la pile de disques 11 un effort de parc, puis bloqué en position par l'organe de blocage 14.

L'effort de parc est ainsi maintenu sans l'aide du moteur électrique, dont l'alimentation électrique peut être coupée, ce qui diminue la consommation électrique des freins et évite l'échauffement des moteurs électriques.

Le pilote de l'aéronef a à sa disposition un sélecteur 52 à deux positions grâce auquel il place le système de freinage soit dans le mode commandé, soit dans le mode de parc.

Le procédé de l'invention s'applique plus particulièrement à des situations dans lesquelles le système de freinage est en mode commandé et l'aéronef est à l'arrêt. Dans ce cas, pour maintenir l'aéronef immobile, le pilote appuie constamment sur les pédales de frein 51, de sorte que les moteurs électriques des actionneurs 8 sont constamment sollicités et risquent de s'échauffer.

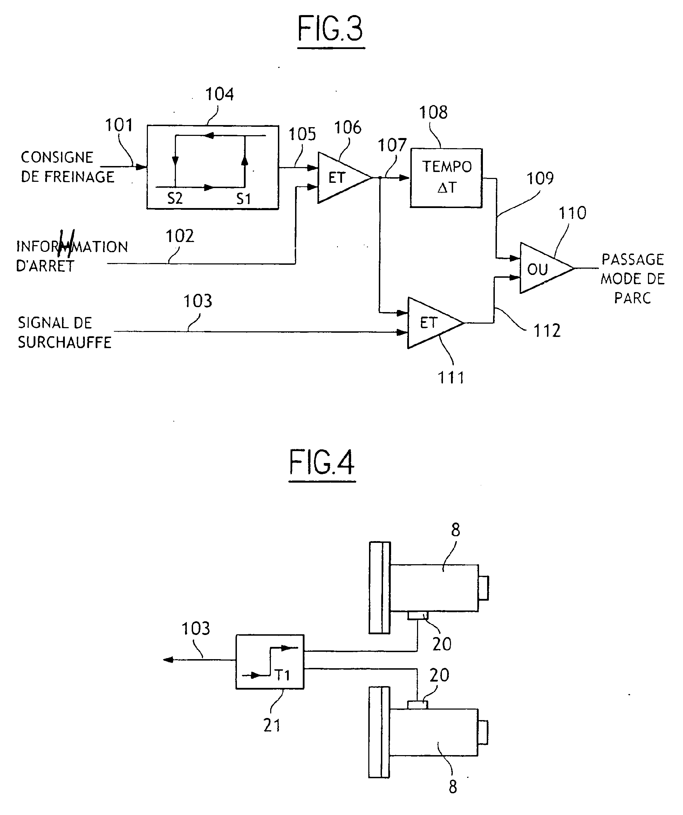

Selon l'invention, le système de freinage est alors configuré pour passer automatiquement en mode de parc, selon la logique illustrée à la figure 3.

Dans le mode particulier de mise en oeuvre du procédé de l'invention illustré ici, la logique de passage automatique en mode de parc fait appel à trois entrées :
- une première entrée constituée par la consigne d'effort de freinage 101 ;
- une deuxième entrée constituée par une information d'arrêt 102 générée par un des calculateurs de l'aéronef et indiquant si l'aéronef est à l'arrêt ;
- une troisième entrée constituée par un signal de surchauffe 103 des moteurs électriques des actionneurs.

On détaillera plus loin comment sont élaborées ces entrées.

La consigne de freinage est traitée par un comparateur à double seuil 104. La sortie 105 du comparateur 104 passe à 1 si la consigne d'effort de freinage 101 augmente au delà d'un premier seuil d'effort S1, et reste à 1 tant que la consigne de freinage 101 ne descend pas sous un deuxième seuil d'effort S2 inférieur au premier seuil d'effort S1.

La sortie 105 du comparateur 104 et l'information d'arrêt 102 forment les entrées d'une première porte ET 106. La porte ET 106 comporte une sortie 107 qui passe par une temporisation 108 pour former une première entrée 109 d'une porte OU 110. La sortie de la porte OU 110 constitue un signal de passage en mode de parc pour le système de freinage.

Par ailleurs, le signal de surchauffe 103 forme, avec la sortie 107 de la première porte ET 106, les entrées d'une deuxième porte ET 111 dont la sortie 112 forme la deuxième entrée de la porte OU 110.

Le fonctionnement de la logique est le suivant. L'aéronef étant à l'arrêt, ce qui est indiqué par l'information d'arrêt 102, le pilote maintient l'aéronef immobile en appuyant sur les pédales de frein 51. Si la consigne de freinage générée par le module de commande en fonction de l'appui sur les pédales dépasse le premier seuil d'effort S1, alors la sortie 105 du comparateur passe à 1, ce qui fait également passer à 1 la sortie de la première porte ET 107. Au bout d'une durée ΔT imposée par la temporisation 108, la sortie de la temporisation 108 qui forme la première entrée 109 de la porte OU 110 passe à 1, de sorte que la porte OU 110 délivre au système de freinage un signal de passage en mode de parc.

Cependant, si avant la fin de la durée ΔT, le signal de surchauffe 103 passe à 1, alors la sortie de la porte ET 111, qui forme la deuxième entrée 112 de la porte OU 110 passe à 1. La porte OU 110 délivre alors au système de freinage un signal de passage en mode de parc.

Pour revenir en mode commandé, il suffit que la consigne d'effort de freinage 101 descende au dessous du deuxième seuil d'effort S2, signe que le pilote entend relâcher le freinage de l'aéronef. La sortie 105 du comparateur 104 passe à 0, ce qui annule la sortie 107 de la première porte ET 106, et, partant, annule les deux entrées 109 et 112 de la porte OU 110. La porte OU 110 cesse de délivrer le signal de passage en mode de parc, et le système de freinage revient en mode commandé.

En pratique, le premier seuil d'effort S1 est choisi suffisamment haut pour que le système de freinage ne passe pas de façon incessante du mode commandé au mode de parc. De préférence, le premier seuil d'effort S1 correspond à un seuil de courant d'alimentation du moteur électrique de l'actionneur au delà duquel le moteur électrique risque de chauffer, si le temps pendant lequel la consigne d'effort de freinage est supérieure au premier seuil d'effort S1 est supérieur à la temporisation ΔT.

Quant au deuxième seuil d'effort S2, il est choisi de sorte que le système de freinage reste en mode de parc même en cas de « pompage » du pilote sur les pédales de frein 51.

La temporisation a pour fonction d'éviter le passage en mode de parc lors d'un bref appui sur les pédales de frein 51. En pratique, la durée ΔT de la temporisation est de l'ordre de quelques secondes.

La consigne d'effort de freinage 101 est générée par le module de commande 50 à partir des signaux venant des pédales de frein 51. Elle peut encore, dans un mode dégradé, être constituée directement du signal des pédales de frein 51.

L'information d'arrêt 102 est générée par un calculateur de l'aéronef à partir d'une information de vitesse de l'aéronef, ou encore d'une information provenant d'un capteur de rotation de l'une quelconque des roues de l'aéronef.

Quant au signal de surchauffe 103 , il peut être élaboré de différentes façons.

Selon un premier mode d'élaboration illustré à la figure 4, ce signal peut provenir de sondes de température 20 installées dans les moteurs électriques des actionneurs 8, ces sondes étant reliées à un comparateur 21 de sorte que lorsque l'une d'elles mesure une température supérieure à un seuil T1 donné, la sortie du comparateur 21 qui forme le signal de surchauffe 103, passe à 1.

Plutôt que de mesurer directement la température au moyen de sondes de température, on peut encore mesurer la résistance du bobinage de chaque moteur électrique, cette résistance variant avec la température du moteur électrique.

Selon un deuxième mode d'élaboration, on génère pour chaque moteur électrique un signal d'accumulation d'énergie en intégrant sur le temps le courant d'alimentation dudit moteur électrique. Le signal d'accumulation d'énergie ainsi calculé est représentatif de l'énergie fournie au moteur électrique, et donc du risque d'échauffement de celui-ci.

Le signal de surchauffe 103 forme alors la sortie d'un comparateur recevant en entrée tous les signaux d'accumulation d'énergie, cette sortie passant à 1 si l'un des signaux d'accumulation d'énergie dépasse un seuil prédéterminé.

L'invention n'est pas limitée à ce qui vient d'être décrit, mais bien au contraire englobe toute variante entrant dans le cadre défini par les revendications.

En particulier, bien que l'on ait indiqué que la consigne de freinage est ici une consigne en effort, la consigne pourra prendre toute autre forme comme par exemple une consigne en position, représentative d'un effort.

## Revendications

1. Procédé de protection dans un système de freinage de véhicule comportant au moins un frein pourvu d'au moins un actionneur électromécanique (8) qui comporte un poussoir (13) actionné par un moteur électrique pour appliquer sélectivement un effort sur des éléments de friction (11) du frein, le système de freinage pouvant fonctionner à la demande du pilote du véhicule soit dans un mode commandé dans lequel le poussoir (13) de l'actionneur (8) est actionné par le moteur électrique pour appliquer sélectivement sur les éléments de friction (11) un effort de freinage en réponse à une consigne de freinage (101), soit dans un mode de parc dans lequel le poussoir (13) de l'actionneur (8) est bloqué dans une position où il exerce un effort de parc sur les éléments de friction (11) en l'absence d'action du moteur, **caractérisé en ce que** le procédé comporte l'étape de, alors que le véhicule est à l'arrêt, que le système de freinage est en mode commandé et que le poussoir (13) est commandé pour appliquer un effort sur les éléments de friction, passer automatiquement sans intervention du pilote du mode commandé au mode de parc.

2. Procédé selon la revendication 1, **caractérisé en ce que** le passage du mode commandé au mode de parc n'intervient qu'après un délai (ΔT) prédéterminé.

3. Procédé selon la revendication 1, **caractérisé en ce que** le passage du mode commandé au mode de parc intervient en réponse à un signal de surchauffe (103) indicatif d'un dépassement d'un seuil de température (T1) dans le moteur électrique de l'actionneur.

4. Procédé selon la revendication 1, **caractérisé en ce que** le passage du mode commandé au mode de parc n'est possible que si la consigne de freinage (101) dépasse un premier seuil (S1) prédéterminé.

5. Procédé selon la revendication 4, **caractérisé en ce que** le passage inverse du mode de parc en mode commandé intervient si la consigne de freinage (101) descend sous un deuxième seuil (S2) prédéterminé inférieur au premier seuil (S1).

6. Procédé selon la revendication 1, **caractérisé en ce que** le passage inverse du mode de parc en mode commandé intervient en réponse à un signal (102) indiquant que l'aéronef n'est plus à l'arrêt.

## Claims

1. A protection method in a vehicle brake system comprising at least one brake provided with at least one electromechanical actuator (8) which comprises a pusher (13) actuated by an electric motor to apply a force selectively onto friction elements (11) of the brake, it being possible for the brake system to operate, at the request of the pilot of the vehicle, either in a controlled mode in which the pusher (13) of the actuator (8) is actuated by the electric motor so as to apply a braking force selectively to the friction elements (11) in response to a braking instruction (101), or in a parking mode in which the pusher (13) of the actuator (8) is locked in a position in which it exerts a parking force on the friction elements (11) in the absence of drive from the motor, said method being **characterized in that** it includes the step of acting, while the vehicle is at a standstill, while the brake system is in the controlled mode, and while the pusher (13) is controlled to apply a force on the friction element, to switch automatically and without intervention from the pilot from the controlled mode to the parking mode.

2. A method according to claim 1, **characterized in that** switch-over from the controlled mode to the parking mode takes place only after a predetermined delay (ΔT).

3. A method according to claim 1, **characterized in that** switch-over from the controlled mode to the parking mode takes place in response to an overheating signal (103) indicating that a temperature threshold (T1) has been exceeded in the electric motor of the actuator.

4. A method according to claim 1, **characterized in that** switch-over from the controlled mode to the parking mode is possible only if the braking instruction (101) exceeds a first predetermined force threshold (S1).

5. A method according to claim 4, **characterized in that** switching back from the parking mode to the controlled mode takes place if the braking instruction (101) descends below a second predetermined force threshold (S2) that is lower than the first force threshold (S1).

6. A method according to claim 1, **characterized in that** switching back from the parking mode to the controlled mode takes place in response to a signal (102) indicating that the aircraft is no longer at a standstill.

## Patentansprüche

1. Verfahren zum Schutz in einem Bremssystem eines Fahrzeugs, umfassend mindestens eine Bremse, die mit mindestens einem elektromechanischen Aktuator (8) versehen ist, der einen Stößel (13) umfasst, der von einem Elektromotor angetrieben wird, um auf Reibungselemente (11) der Bremse selektiv eine Kraft aufzubringen, wobei das Bremssystem auf eine Anforderung des Piloten des Fahrzeugs hin entweder in einem gesteuerten Modus, in dem der Stößel (13) des Aktuators (8) von dem Elektromotor so angetrieben wird, dass er auf die Reibungselemente (11) selektiv eine Bremskraft in Antwort auf einen Bremssollwert (101) ausübt, oder in einem Parkmodus arbeiten kann, in dem der Stößel (13) des Aktuators (8) in einer Position blockiert ist, in der er eine Parkkraft auf die Reibungselemente (11) bei fehlender Motorwirkung ausübt, **dadurch gekennzeichnet, dass** das Verfahren den Schritt umfasst, dass es dann, wenn das Flugzeug still steht, das Bremssystem in dem gesteuerten Modus ist und der Stößel (13) so gesteuert wird, dass er auf die Reibungselemente eine Kraft aufbringt, es automatisch ohne ein Eingreifen des Piloten vom gesteuerten Modus in den Parkmodus übergeht.

2. Verfahren nach Anspruch 1, **dadurch gekennzeichnet, dass** der Übergang vom gesteuerten Modus in den Parkmodus erst nach einer vorgegebenen Verzögerung (ΔT) stattfindet.

3. Verfahren nach Anspruch 1, **dadurch gekennzeichnet, dass** der Übergang vom gesteuerten Modus in den Parkmodus in Antwort auf ein Überhitzungssignal (103) stattfindet, das ein Überschreiten eines Temperaturschwellenwertes (T1) in dem Elektromotor des Aktuators anzeigt.

4. Verfahren nach Anspruch 1, **dadurch gekennzeichnet, dass** der Übergang vom gesteuerten Modus in den Parkmodus nur möglich ist, wenn der Bremssollwert (101) einen ersten vorgegebenen Schwellenwert (S1) überschreitet.

5. Verfahren nach Anspruch 4, **dadurch gekennzeichnet, dass** der umgekehrte Übergang vom Parkmodus in den gesteuerten Modus stattfindet, wenn der Bremssollwert (101) unter einen zweiten vorgegebenen Schwellenwert (S2) absinkt, der unter dem ersten Schwellenwert (S1) liegt.

6. Verfahren nach Anspruch 1, **dadurch gekennzeichnet, dass** der umgekehrte Übergang vom Parkmodus in den gesteuerten Modus in Antwort auf ein Signal (102) stattfindet, das anzeigt, dass das Flugzeug nicht mehr still steht.
